# EUROPEAN PATENT SPECIFICATION

(11) **EP 4 584 852 B1**
(45) Date of publication and mention of the grant of the patent: **28.10.2026**
(21) Application number: 23764968.6
(22) Date of filing: 08.09.2023
(51) Int. Cl.: H01R 25/16, H02G 5/00

(54) **BUSBAR AND METHOD FOR MANUFACTURING A BUSBAR**
STROMSCHIENE UND VERFAHREN ZUM HERSTELLEN EINER STROMSCHIENE
BARRE OMNIBUS ET PROCÉDÉ DE FABRICATION D'UNE BARRE OMNIBUS

(30) Priority: 09.09.2022 EP 22194906
(43) Date of publication of application: 16.07.2025
(73) Proprietor: Rogers BV, 9940 Evergem (BE)
(72) Inventor: DE BOODT, Sebastiaan, 9940 Evergem (BE); SHI, Wei, 9940 Evergem (BE); ZHANG, Yuqiang, 9940 Evergem (BE); PAZ SAGÜÉS, Pablo, 9940 Evergem (BE)
(74) Representative: Müller Schupfner & Partner Patent- und Rechtsanwaltspartnerschaft mbB (Muc)
(86) International application number: PCT/EP2023/074769
(87) International publication number: WO 2024/052547

(56) References cited:
- EP-A1- 1 094 553
- EP-B1- 3 599 676
- CN-A- 104 022 414

## Description

The present invention concerns a busbar and a method for manufacturing a busbar, in particular a busbar on that several capacitors can be arranged, and a method for connecting an electronic component to the busbar.

Laminated busbars typically comprise layers of fabricated copper separated by thin dielectric materials, laminated into a unified structure. Examples for laminated busbars can be found in CN 203 504 394 U, CN 104 022 414 A1 or CN 202 474 475 U. Usually a "plug-in" region is included into the busbar, in order to connect electrical poles of an electronic component, such as a capacitor directly to different conductive layers, wherein each of the conductive layers is assigned to a type of the poles provided by each capacitor. Typically, the capacitors are connected to the plug-in region by inserting a pin into a hole of the plug-in region. Subsequently, the pins are adhesively connected to the busbar, for example by soldering and/or welding.

However, there is a certain amount of energy needed to realize an adhesive connection between the busbar and the pin. Further, the production of the adhesive bond might cause a curvature protruding from the busbar, having in general a flat surface, in particular when the connection is realized by soldering. Such a curvature might be a problem in a certain application area of the busbar. Further, when the pin region is heated, a lot of heating energy is lost into the flat layers of the conductive material of the busbar.

Therefore, it has proven advantageous to provide a plug-in region as being discussed in EP 3 599 676 B1 or EP 1 094 553 A1. CN 104 022 414 A discusses also a stack busbar.

Considering above, it is an object of the present invention to further improve the busbars known in the state of the art, in particular with respect to their production and their potential fields of applications.

This object is achieved by a busbar according to claim 1 and a method for manufacturing a busbar according to claim 13 . Preferred embodiments are incorporated in the dependent claims, the description and the figures.

According to a first aspect of the present invention a busbar, in particular a laminated busbar, configured for mounting an electronic component on the busbar, in particular a passive electronic component, is provided, wherein the busbar comprises a first conductive layer having a main body and at least one plug-in region, the at least one plug-in region being configured for inserting a contact element of the electronic component, in particular a pin of the electronic component, into the busbar, wherein the plug-in region comprises
- a centre section having a receiving recess for receiving the contact element,
- a first recess and a second recess, surrounding the centre section and
- a bridge section for connecting the centre section and the main body of the first conductive layer,
wherein the bridge section, extending between the main body and the centre section, has a first length along its extension direction and a first width, measured along a direction perpendicular to the extension direction, wherein a ratio of the first width to the first length is smaller than 0.5, preferably smaller than 0.4 and most preferably smaller than 0.3.

Contrary to the plug-in regions of the prior art, the present invention suggests a plug-in region having a bridge section, being formed as a comparably narrow and long, i. e. slim, bridge section. Especially, the bridge section is formed by a strip and/or web section, extending from the centre section to the main body of the first conductive layer. Surprisingly, it turned out that by creating such a dimensioned bridge section it is possible to store heat energy in the plug-in region during the soldering process, in particular within the centre section and/or the bridge section. In particular, it is possible to create higher temperatures in a shorter time in the centre section, compared to the methods known in the prior art. As a result, the reduced loss of thermal energy during the soldering process by using the bridge elements of the present invention has benefits regarding efficiency of the soldering process, especially with respect to the energy amount being necessary to create a soldering process. In contrast to the plug-in regions of the prior art, less energy dissipates via the bridge section during the soldering process and therefore, the soldering process can be realized by using less energy and within a shorter period of time. This also reduces the probability of damages of electric components, which are connected to the busbar by a soldering process, since the electronic components are no longer exposed to high temperatures, being necessary to perform the soldering process by using the bridge elements known from the prior art.

Preferably, the first conductive layer includes a plug-in region, the plug-in region being arranged inside the base body. In other words, a plug-in region is located for example in middle of the first conductive region and not in an edge region or at the border of the first conductive layer and is especially incorporated for receiving a contact element such as a pin element of a capacitor.

The first conductive layer, the bridge section, the main body and/or the centre section has a thickness between 0.1 mm and 6 mm, preferably between 0.3 mm and 4 mm and most preferably between 0.5 mm and 3 mm. Furthermore, it is provided that the first conductive layer is made from copper and/or aluminium. Especially, creating a busbar being made from aluminium has benefits, because it is a lightweight form of a busbar. Preferably, the at least one first conductive layer and/or the at least second conductive layer is made from a bare metal, such as copper or aluminum. In particular, the thickness of the busbar, measured in a direction perpendicular to the main extension plane, is between 0.5 mm and 5 mm, more preferably between 0.3 mm and 3 mm, and most preferably between 0.5 mm and 3 mm. Especially, the thickness between 0.5 mm and 3 mm is favourable for busbars used in inverters. Because the power transferred in vehicles is not very high as in other busbar applications, thin conductor can be used in such applications.

It is also conceivable that the busbar includes a third layer, in particular a third conductive layer. The specifics and benefits, being explained in context of the first and the second conductive layer applies analogously for the third conductive layer.

Preferably, the busbar is either a flat product extending in a main extension plane or is bended as a 3D structure, for example U-shaped, Z-shaped or L-shaped. The first conductive section and/or the second conductive section are preferably a copper or aluminum sheet, especially a bare copper or aluminum sheet that mainly defines the main extension plane.

Another preferred embodiment addresses a first conductive layer and/or a second conductive layer, i. e. corresponding base bodies, centre sections and/or bridging sections, being made from aluminium or copper and furthermore being preferably plated with a tin and or nickel layer. Such a covering by a tin- or nickel-plated layer avoids corrosion of the components of the busbar. Furthermore, it is preferably provided that the busbar comprises a first conductive layer and a second conductive layer, each extending mainly parallel to a main extension plane and being stacked along a stacking direction above each other. Preferably, the first conductive layer and the second conductive layer each include a plug-in region having the specifications, being mentioned above. Especially, both the first conductive layer and the second conductive layer have a comparably narrow and long bridge section. It is conceivable that the centre section of the first conductive layer and/or second conductive layer is arranged in the same plane as the plane of the main body or, alternatively, it is located in a parallel plane, being spaced from the plane of the main body.

Furthermore, it is preferably provided that the first recess and the second recess and/or the receiving recess are formed as cut-outs in the first conductive layer and/or second conductive layer. Preferably, such cut-outs extend through the whole thickness of the first conductive layer and/or second conductive layer and therefore reach from a top side of the first conductive layer to the bottom side of the first conductive layer and/or second conductive layer. Alternatively, it is also conceivable, that the first recess and/or the second recess and/or the receiving recess is formed as a region of reduced thickness of the conductive layer.

According to a preferred embodiment, it is provided that along a radial direction, starting from the middle of the centre section, the bridge section is arranged at least partially between the first recess and the second recess. Such an arrangement of the first recess and the second recess indicates that the bridge section does not extend only in a radial direction. This is beneficial, since it allows to create a comparably long and narrow bridge section without extending the necessary space, being required for the plug-in region. As a result, it is possible to create a compact plug-in region, being incorporated into the first conductive section, having simultaneously a slim bridge section.

Preferably, it is provided that the first recess and/or the second recess has a maximum second length, measured along a radial direction starting from the middle of the centre section, wherein the first length is longer than the second length, preferably at least 1.3 times, more preferably at least 1.6 times and most preferably 2 times longer than the maximum second length. It turned out that it is possible dimensioning the first and second maximum length to create a compact configuration for the bridge section and the first and second recess, being also mechanically stable for creating a plug-in region, which also can withstand the mechanical pressure, which might apply during the bonding process, especially the soldering process. At the same time, the dimension mirrors the comparably narrow and long design of the bridge section.

Preferably, it is provided that the first width of the bridge section has a value between 0.2 mm and 2.5 mm, more preferably between 0.55 mm and 1.5 mm and most preferably between 0.65 mm and 1.1 mm. Preferably, it is provided that the first width is determined as an average value along the extension of the bridge section along its extension direction.

According to the invention, it is provided that the extension direction is slanted to a radial direction, starting from the middle of the centre section. Preferably, the extension direction of the bridge section is slanted or angled about an angle between 10° and 75°, more preferably between 15° and 60° and most preferably between 20° and 50°. As a consequence, a compact plug-in region is formed.

Preferably, it is provided that the busbar comprises a second conductive layer. Preferably, the second conductive layer also includes a plug-in region having a bridge section, having the ratio between the first width and the first length as being discussed above. Especially, the first and second conductive layer are stacked above each other and preferably spaced from each other by an insulation layer. Thus, it is possible that one pin or contact element of the electric component is in contact with the second conductive layer, while the other pin of the conductor element is in contact with first conductive layer, wherein the contact element reaches through the stacked arrangement of the first and second conductive layer for contacting the respective conductive layer.

Preferably, it is provided that the first recess and the second recess include a section of varying second lengths, wherein along a circumferential direction around the centre section, the second length of the first recess and/or the second recess measured along the radial direction, varies within the section of varying width. In contrast to the recesses, being known from the prior art, the first recess and second recess are mainly formed by a section of varying second lengths. For example, a ratio of the width of the section of varying second length along the circumferential direction to a total width of the first recess and the second recess extending along the circumferential direction is greater than 0.5, preferably larger than 0.7 and most preferably larger than 0.8. In other words: The second length of the recess, measured along the radial direction, varies nearly completely along the dimensions of the second or first recess along the circumferential direction. Preferably, it is provided that the first recess and the second recess form sharp angled end zones, i. e. no circular shaped end section along the circumferential direction.

Preferably, it is provided that a maximum second length of the first recess and/or the second recess measured along the radial direction has a value between 1 mm and 10 mm, preferably between 2 mm and 8 mm and most preferably between 2.5 mm and 6 mm.

Preferably, it is provided that the first width of the bridge section is constant along its extension direction. Alternatively, it is also conceivable that the first width of the bridge section varies along the extension direction. For example, the first width decreases with increasing distance to the centre section of the plug-in region. Alternatively, it is also conceivable that the first width modulates, i. e. increases and decreases with increasing distance to the centre section. Preferably, it is provided that the first recess or the second recess are substantially crescent shaped.

Preferably the centre region has a circular or elliptical shape. Furthermore, it is provided that the first recess and the second recess are shaped and/or dimensioned equally. In other words: the first recess and the second recess have the same shape and/or the same dimension. As a result a comparably symmetric material distribution in the plug-in region is realized, supporting a mechanical strength and a homogenous heat distribution.

In particular, the centre region can be covered by nickel and/or tin. Covering the centre region is advantageous, since these regions are usually in contact with air and/or the contact element. Therefore, they are prone for corrosion, which can be avoided by a nickel and/or tin plating / cover,

Another aspect of the present invention is a plug-in region for a busbar, according to the present invention. All features being discussed for the busbar apply analogously to the plug-in region and vice versa. Especially, it is conceivable that such a plug-in region is provided and inserted into a corresponding recess of the first conductive layer.

According to a further aspect, a method for manufacturing a busbar according to the present invention is provided, wherein the first recess and/or the second recess is cut out from a metal layer forming the first conductive layer of the busbar. For example, it is conceivable that by a stamping process and/or a laser cut process the first and/or second recess is formed. It is also conceivable that after creating a pre-shape of the first recess and/or second recess the bridge sections are deformed by turning the centre section, such that bridge sections are twisted for forming the desired shape of the bridge section. All features, being discussed and specified in context of the busbar apply analogously to the method for manufacturing the busbar.

Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:
- **Fig. 1**: schematically shows a perspective view on a busbar according to a preferred embodiment of the present invention,
- **Fig. 2**: schematically shows a side view of the busbar from figure 1,
- **Fig. 3**: schematically shows a first conductive layer including a plug-in region for the busbar according to the preferred embodiment,
- **Fig. 4a**: schematically shows the plug-in region of the busbar according to the preferred embodiment in a top view,
- **Fig. 4b**: schematically shows the plug-in region of the busbar according to the preferred embodiment in a cross sectional side view and
- **Fig. 5**: schematically shows a busbar according to a further preferred embodiment of the present invention.

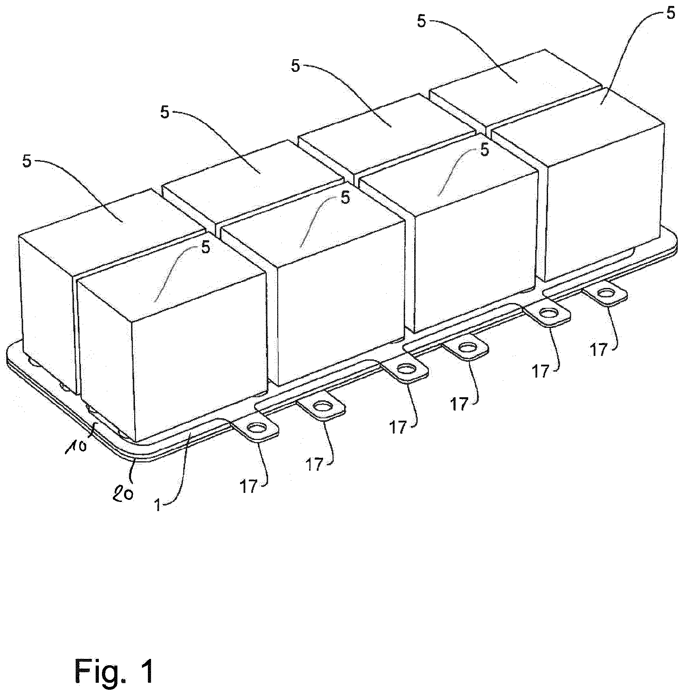

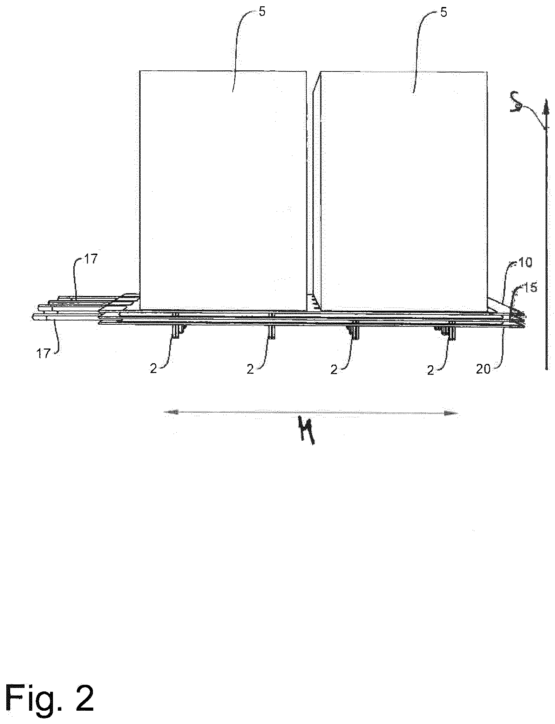

In **Figure 1****,** a busbar 1 according to an exemplary embodiment of the present invention is illustrated. In particular, the busbar 1 is configured as a laminated busbar, comprising at least a first conductive layer 10 and a second conductive layer 20 that are separated by at least one isolation layer 15 (see figure 2). Both the first conductive layer 10 and the second conductive layer 20 are provided to collect and to conduct a current caused by several capacitors 5 being arranged on the busbar 1 and respectively connected to the first conductive layer 10 and the second conductive layer 20.

Especially, the first conductive layer 10 and/or the second conductive 20 layer are made out of a metal, in particular copper and/or aluminium. Preferably, the first conductive layer 10, the second conductive layer 20 and the isolation layer 15 are extending parallel to each other and are stacked on each other along a stacking direction S being perpendicular to a main extending plane M (Fig. 2). In the illustrated embodiment there are eight capacitors 5 being located on the busbar 1. The first conductive layer 10 and the second conductive layer 20 are respectively connected to one electrical pole of each of the capacitors 5. For providing the electrical power, the first conductive layer 10 and/or the second conductive layer 20 each comprises at least one terminal 17 for delivering a certain voltage provided by the capacitors 5 arranged on the busbar 1. Further, it is provided that the first conductive layer 10 extends in a first plane and preferably the corresponding terminal 17 of the first conductive layer 10 extends in the first plane.

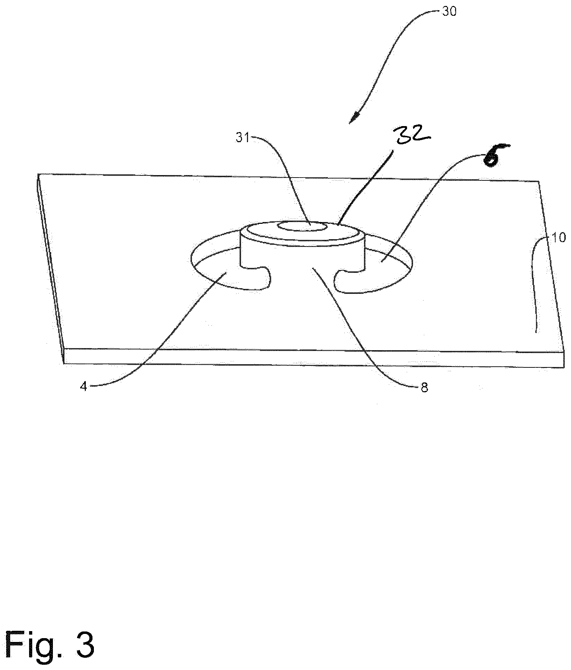

In **Figure 2****,** a side view of the busbar 1 having the capacitors 5 being arranged on the busbar 1 of figure 1 is illustrated. As illustrated the connection between each capacitor 5 and respectively the first conductive layer 10 and the second conductive layer 20 is realized by pins 2. Preferably, each capacitor 5 has a pin 2 assigned to a positive pole of the capacitor 5 and a pin 2 assigned to a negative pole of the capacitor 5. Both pins 2 reach through the busbar 1, wherein one pin 2 of each capacitor 5 is connected to the first conductive layer 10 and the other pin 2 is connected to the second conductive layer 20. It is provided that all negative poles are connected to the first conductive layer 10 and all positive poles of the capacitors 5 are connected to the second conductive layer 20. For connecting the respective pins 2 to the first conductive layer 10 and the second conductive layer 20, plug-in regions 30 are provided (Fig. 3). Preferably, for each pin 2 one plug-in region 30 is provided. The plug-in region 30 comprises a hole, forming a receiving recess 31, being adapted in its shape to the form of the pin 2 so that the pin 2 can be inserted into the hole by a movement in a direction perpendicular to the first plane 11 and/or parallel to the stacking direction S. In the case of a cylindrical pin, the hole might have a circular shape. It is also conceivable that the pin 2 has a rectangular cross section and the hole is formed rectangular in the same form. Preferably, the hole and the cross section of the pin 2 are realized according to a key-lock principle.

In **Figure 3** a plug-in region 30 of the first conductive layer 10 is illustrated in detail in a perspective view. In this embodiment the plug-in region comprises a centre section 32 having the receiving recess. A first recess 4 and the second recess 6 surround the centre section 32. A main body 3 of the first conductive layer 10 is connected to the centre section via a bridge section 8. Thus, it is possible to provide an electric connection between the main body 3, being substantially flat and extending parallel to a plane parallel to the main extension direction of the busbar 1. In the embodiment of figure 3 the centre section 32 of the plug-in region 30 extends in a plane parallel to the main extension direction of the busbar and the main body, wherein the plane of the centre section 32 is spaced from the plane of the main body 3.

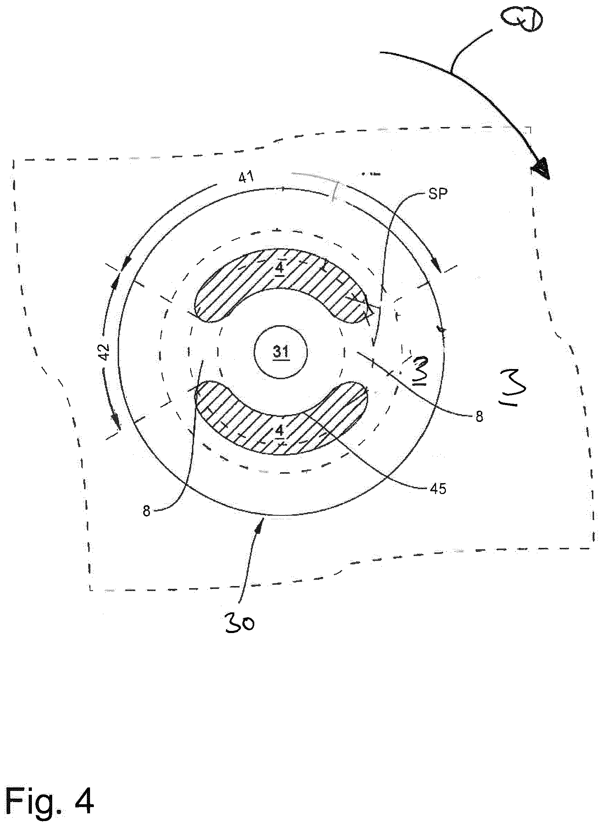

In **Figure 4****,** a detailed view on the plug-in region 30 according to the state of the art is illustrated in a top view. The plug-in region 30 is surrounded by the first recess 4 and the second recess 6. The first recess 4 and the second recess 6 are intended for limiting a heat transfer during a soldering process that connects the pin 2 to the plug-in region 30. Without such recesses 4 the heat generated by the soldering would be directly transferred to the main body 3 of the first conductive layer 10 and could not be used for soldering. The electrical connection between the first conductive layer 10 and the plug-in region 30 is established by the bridge element 8, being located along a circumferential direction CD between the first recess 4 and the second recess 6. In the presented embodiment there are two rip elements 8 extending parallel to each other, along a common line and along a radial direction. Preferably, the centre section 32 of the plug-in region 30 has a disk-like shape.

Preferably, it is provided that along a surrounding path SP, surrounding the plug-in region 30, there is
- a first part 41 being assigned at least to the first recess 4 or to recesses 4, 6 and
- a second part 42 being assigned to the bridge element 8,
wherein the surrounding path SP especially corresponds to an outer shape 45 of the centre section 32 of the plug-in region 30 and/or the shape of the receiving recess 31 of the plug-in region 30. For example, the surrounding path SP corresponds to a circle being concentric to the hole of the plug-in region 30.

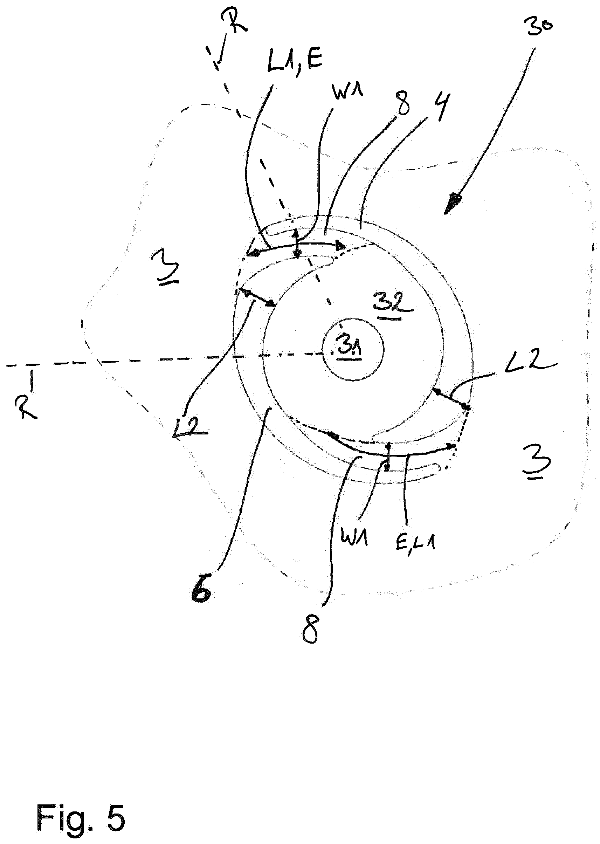

In **Figure 5** a plug-in region 30 for a busbar 1 according to a preferred embodiment of the present invention is illustrated. Surprisingly, it turned out that by modifying the shape of the bridge section 8, it is possible to increase the heat, being stored during the soldering process in the bridge section 8, and therefore in the region of the centre section 32 of the plug-in region 30. In particular, it is provided that the bridge section 8, extending between the main body 3 and the centre section 32, has a first length L1 along its extension direction E and a first width W1 measured along a direction perpendicular to the extension direction E, wherein a ratio of the first width W1 to the first length L1 is smaller than 1, preferably smaller than 0.5 and more preferably smaller than 0.3.

In other words: It turned out that bridge sections 8, being comparably slim, have the benefit that the energy transfer, i. e. the heat transfer, via the bridge section 8 during the soldering process is significantly reduced. As a consequence, heat is stored in the centre section 32 and the bridge section 8 instead of getting lost by heat transfer to the main body 3 of the first conductive layer 10. Actually, it turned out that it is even possible to establish temperatures of about 275°C in the section, including the bridge section 8 and the centre section 32 of the plug-in region 30. Compared to such high temperatures, the bridge section 8, being illustrated in figure 4b, can only establish temperatures, being about 210 °C during the soldering process. This represents a significant improvement concerning the ability to store energy in the region of the receiving recess 31. As a result, energy for performing the soldering process can be reduced and the chances for successfully soldering a pin or contact element to the first conductive section, i. e. to the receiving recess 31, can be significantly improved.

In particular, it is provided that the extension direction E does not correspond to a radial direction R, starting from a middle of a centre section 32. In other words: The bridge section 8 does not extend parallel to a radial direction R starting from a middle of the centre section 32. Preferably, the extension direction E of the bridge section 8 is slanted or angled with respect to the radial direction R, preferably about an angle between 10° and 75°, preferably between 15° and 60° and most preferably between 20° and 50°. In particular, it is provided that the bridge section 8 is arched in a plane, being mainly parallel to the main extension plane. In particular, it is provided that the bridge section 8 and the centre section 32 and the main body 3 are arranged in a common plane, being parallel to the main extension plane M. Alternatively, it is also conceivable that the centre section 32 is arranged in a plane, being parallel to the plane of the main body 3 and being spaced from the plane of the main body 3.

Due to the extension of the bridge section 8, along a direction being not parallel to the radial direction R, the bridge section 8 is at least partially arranged between the first recess 4 and the second recess 6 along the radial direction R. In other words: Along a radial direction R there is at least a section, in which the first recess 4 and the second recess 6 overlap. The result of such an arrangement, especially concerning the angled extension of a bridge section 8 with respect to the radial direction R, is providing a comparably long and narrow, i.e. a slim, bridge section 8 without extending the necessary space for the plug-in region 30. As a result, it is possible to incorporate a compact plug-in region 30, especially compact zone including the centre section 32 and the bridge section 8 and simultaneously provide a comparably long and narrow bridge section 8 for creating the benefits concerning the heat storage during the soldering process.

Furthermore, it is preferably provided that the first recess 4 and/or the second recess 6 has a maximum second length L2, measured along the radial direction R. Preferably, the first length L1 is longer than the second length L2, preferably at least 1.3 times, more preferably at least 1.6 times and most preferably 2 times longer than the maximum second length L2. It turned out that in case of choosing such dimensions, the bridge element 8 has a sufficient length for creating the positive effects concerning the storage of heat and simultaneously provide a mechanical stability for the centre section 32 and the plug-in region 30, being incorporated into the first conductive layer 10.

Preferably, it is provided that the plug-in region 30 is included in the first conductive layer 10, especially is incorporated in a centre section 32 of the first conductive layer 10. In other words: The plug-in region 30 is located within the first conductive layer 10, preferably dependent on the dimensions of the electric component, being intended to be plugged into this receiving recess 31 of the plug-in region 30.

Preferably, it is provided that along a circumferential direction CD a second length L2, measured along the radial direction R starting from the middle of the centre section 32, varies along the circumferential direction CD. Especially, there is a section of varying second lengths L2, in which the first recess 4 and/or second recess 6 changes its second length L2 along the circumferential direction CD. Especially, this is a difference to the recesses, being known from the prior art, especially known from figure 4, in which only the front ends of the recess have some varying second lengths L2, measured along the radial direction R. Instead, the second length L2 of the first recess 4 and/or the second recess 6 of the embodiment of figure 5 vary mainly along its whole extension along the circumferential direction CD, especially the first recess 4 and the second recess 6 have tapering end zones forming sharp angled end zones of the first recess 4 and the second recess 6 along the circumferential direction CD. In particular, it is provided that the maximum second length L2 is shifted from a middle of the first recess 4 and/or second recess 6 along the circumferential direction CD. Preferably, it is provided that the first recess 4 and the second recess 6 have the same or a similar shape and size. Preferably, the shape of the first recess 4 and/or the second recess 6 is substantially crescent-shaped shaped.

Preferably, it is provided that the first width W1 of the bridge section 8 is mainly constant, i. e. the first width W1 is constant along an extension, being at least 0.5 times of the first length L1. Alternatively, it is also conceivable that the first width W1 of the bridge section 8 varies along the extension direction E and for example decreases with increasing distance from the centre section 32. Concerning the first width W1, it is preferably provided that the first width W1 is determined as the average first width W1 along the extension direction E of the bridge section 8 extending from the centre section 32 to the main body 3 of the first conductive section. Furthermore, it is preferably provided that the first conductive layer 10 and the second conductive layer 20 each have at least one plug-in region 30 according to the described specifications including the bridge section 8 being formed by a long and narrow section.

Preferably, the thickness of the bridge section 8 is equal to the thickness of the main body 3 and/or the centre section 32 of the plug-in region 30. For example, the thickness of the first conductive layer 10 is between 0.1 mm and 6 mm, preferably between 0.2 mm and 5 mm and most preferably between 0.3 mm and 4 mm. In general, it is possible that the first conductive layer 10 and/or the second conductive layer 20 is plated or unplated. Preferably the conductive layer, made from aluminium or copper, is plated by a tin-plated or nickel-plated layer.

### Reference signs:

- 1: busbar
- 2: pin
- 3: main body
- 4: first recess
- 5: capacitor
- 6: second recess
- 8: bridge section
- 10: first conductive layer
- 15: insulation layer
- 17: terminal
- 20: second conductive layer
- 30: plug-in region
- 31: receiving recess
- 32: centre section
- 40: third conductive layer
- 41: first part
- 42: second part
- 45: outer shape
- S: stacking direction
- M: main extending plane
- SP: surrounding path
- CD: circumferential direction
- E: extension direction
- R: radial direction
- A1: first cross section
- A2: second cross section
- D: thickness
- L1: first length
- L2: second length
- W1: first width

## Claims

1. A busbar (1), in particular a laminated busbar (1), configured for mounting an electronic component on the busbar (1), in particular a passive electronic component, wherein the busbar (1) comprises a first conductive layer (10) having a main body (3) and at least one plug-in region (30), the at least one plug-in region (30) being configured for inserting a contact element of the electronic component, in particular a pin (2) of the electronic component, into the busbar (1), wherein the plug-in region (30) comprises
- a centre section (32) having a receiving recess (31) for receiving the contact element,
- a first recess (4) and a second recess (6), surrounding the centre section (32) at least partially, and
- a bridge section (8) for connecting the centre section (32) and the main body (3) of the first conductive layer,
wherein the bridge section (8), extending between the main body (3) and the centre section (32), has a first length (L1) along its extension direction (E) and a first width (W1), measured along a direction perpendicular to the extension direction (E),
wherein a ratio of the first width (W1) to the first length (L1) is smaller than 0.5, preferably smaller than 0.4 and most preferably smaller than 0.3, **characterized in that** the extension direction (E) is slanted to a radial direction (R) starting from a middle of the centre section (32).

2. The busbar (1) according to claim 1, wherein along a radial direction (R), starting from a middle of the centre section (32), the bridge section (8) is arranged at least partially between the first recess (4) and the second recess (6).

3. The busbar (1) according to claim 1, wherein the first recess (4) and/or the second recess (6) has a maximum second length (L2) measured along a radial direction (R) starting from a middle of the centre section (32), wherein the first length (L1) is larger than the maximum second length (L2), preferably at least 1.3 times, more preferably at least 1.6 time and most preferably 2 times larger than the maximum second length (L2).

4. The busbar (1) according to one of the preceding claims, wherein the first width (W1) of the bridge section (8) has a value between 0.4 mm and 2.5 mm, more preferable between 0.55 mm and 1.5 mm and most preferably between 0.65 and 1.1 mm.

5. The busbar (1) according to one of the preceding claims, wherein the busbar (1) comprises a second conducive layer (20).

6. The busbar (1) according to one of the preceding claims, wherein the first recess (4) and/or the second recess (6) includes a section of varying second length (L2), wherein along a circumferential direction (CD) around the centre section (32) the second length (L2) of the first recess (4) and/or second recess (6) measured along the radial direction (R), varies within the section of varying second length (L2).

7. The busbar (1) according to one of the preceding claims, wherein a maximum second length (L2) of the first recess (4) and/or the second recess (6) measured along the radial direction (R) has a value between 1 mm and 10 mm, preferably between 2 mm and 8 mm and most preferably between 2.5 and 6 mm.

8. The busbar (1) according to of the preceding claims, wherein the first width (W1) of the bridge section (8) is constant along its extension direction (E).

9. The busbar (1) according to one of the preceding claims, wherein the first recess (4) and/or the second recess (6) are substantially crescent-shaped.

10. The busbar (1) according to one of the preceding claims, wherein the centre region (32) has a circular or elliptical shape.

11. The busbar (1) according to one of the preceding claims, wherein the the bridge section (8), the main body (3) and/or the centre section (32) has a thickness between 0.4 mm and 2.5 mm, preferably between 0.55 mm and 1.5 mm and most preferably between 0.65 mm and 1,1 mm.

12. The busbar (1) according to one of the preceding claims, wherein the centre region (32) is covered by nickel and/or tin.

13. A method for manufacturing a busbar (1) according to one of the preceding claims, wherein the first recess (4) and/or the second recess (6) is cut into a first conductive layer (10) of the busbar (1).

## Patentansprüche

1. Stromsammelschiene (1), insbesondere eine laminierte Stromsammelschiene (1), die zur Montage eines elektronischen Bauteils auf der Stromsammelschiene (1), insbesondere eines passiven elektronischen Bauteils, ausgelegt ist, wobei die Stromsammelschiene (1) eine erste leitende Schicht (10) mit einem Hauptkörper (3) und mindestens einem Steckbereich (30) umfasst, wobei der mindestens eine Steckbereich (30) zum Einführen eines Kontaktelements des elektronischen Bauteils, insbesondere eines Stifts (2) des elektronischen Bauteils, in die Stromsammelschiene (1) ausgelegt ist, wobei der Steckbereich (30) umfasst:
- einen Mittelabschnitt (32) mit einer Aufnahmevertiefung (31) zur Aufnahme des Kontaktelements,
- eine erste Vertiefung (4) und eine zweite Vertiefung (6), die den Mittelabschnitt (32) zumindest teilweise umgeben, sowie
- einen Brückenabschnitt (8) zum Verbinden des Mittelabschnitts (32) und des Hauptkörpers (3) der ersten leitenden Schicht,
wobei der sich zwischen dem Hauptkörper (3) und dem Mittelabschnitt (32) erstreckende Brückenabschnitt (8) eine erste Länge (L1) entlang seiner Ausdehnungsrichtung (E) und eine erste Breite (W1), gemessen entlang einer Richtung senkrecht zur Ausdehnungsrichtung (E), hat, wobei das Verhältnis der ersten Breite (W1) zur ersten Länge (L1) kleiner als 0,5, bevorzugt kleiner als 0,4 und besonders bevorzugt kleiner als 0,3 ist,
**dadurch gekennzeichnet, dass** die Ausdehnungsrichtung (E) gegenüber einer von einer Mitte des Mittelabschnitts (32) ausgehenden radialen Richtung (R) geneigt ist.

2. Stromsammelschiene (1) gemäß Anspruch 1, wobei entlang einer radialen Richtung (R), ausgehend von einer Mitte des Mittelabschnitts (32), der Brückenabschnitt (8) zumindest teilweise zwischen der ersten Vertiefung (4) und der zweiten Vertiefung (6) angeordnet ist.

3. Stromsammelschiene (1) gemäß Anspruch 1, wobei die erste Vertiefung (4) und/oder die zweite Vertiefung (6) eine maximale zweite Länge (L2) hat, gemessen entlang einer radialen Richtung (R), ausgehend von einer Mitte des Mittelabschnitts (32), wobei die erste Länge (L1) größer ist als die maximale zweite Länge (L2), bevorzugt mindestens das 1,3-Fache, mehr bevorzugt mindestens das 1,6-Fache und besonders bevorzugt das 2-Fache der maximalen zweiten Länge (L2).

4. Stromsammelschiene (1) gemäß einem der vorherigen Ansprüche, wobei die erste Breite (W1) des Brückenabschnitts (8) einen Wert zwischen 0,4 mm und 2,5 mm, mehr bevorzugt zwischen 0,55 mm und 1,5 mm und besonders bevorzugt zwischen 0,65 mm und 1,1 mm, aufweist.

5. Stromsammelschiene (1) gemäß einem der vorherigen Ansprüche, wobei die Stromsammelschiene (1) eine zweite leitfähige Schicht (20) umfasst.

6. Stromsammelschiene (1) gemäß einem der vorherigen Ansprüche, wobei die erste Vertiefung (4) und/oder die zweite Vertiefung (6) einen Abschnitt mit variierender zweiten Länge (L2) aufweist, wobei entlang einer Umfangsrichtung (CD) um den Mittelabschnitt (32) die zweite Länge (L2) der ersten Vertiefung (4) und/oder der zweiten Vertiefung (6), gemessen entlang der radialen Richtung (R), innerhalb des Abschnitts mit variierender zweiten Länge (L2) variiert.

7. Stromsammelschiene (1) gemäß einem der vorherigen Ansprüche, wobei eine maximale zweite Länge (L2) der ersten Vertiefung (4) und/oder der zweiten Vertiefung (6), gemessen entlang der radialen Richtung (R), einen Wert zwischen 1 mm und 10 mm, bevorzugt zwischen 2 mm und 8 mm und besonders bevorzugt zwischen 2,5 und 6 mm hat.

8. Stromsammelschiene (1) gemäß den vorherigen Ansprüchen, wobei die erste Breite (W1) des Brückenabschnitts (8) entlang seiner Ausdehnungsrichtung (E) konstant ist.

9. Stromsammelschiene (1) gemäß einem der vorherigen Ansprüche, wobei die erste Vertiefung (4) und/oder die zweite Vertiefung (6) im Wesentlichen sichelförmig sind.

10. Stromsammelschiene (1) gemäß einem der vorherigen Ansprüche, wobei der Mittelabschnitt (32) eine kreisförmige oder elliptische Form hat.

11. Stromsammelschiene (1) gemäß einem der vorherigen Ansprüche, wobei der Brückenabschnitt (8), der Hauptkörper (3) und/oder der Mittelabschnitt (32) eine Dicke zwischen 0,4 mm und 2,5 mm, bevorzugt zwischen 0,55 mm und 1,5 mm und besonders bevorzugt zwischen 0,65 mm und 1,1 mm hat.

12. Stromsammelschiene (1) gemäß einem der vorherigen Ansprüche, wobei der Mittelabschnitt (32) mit Nickel und/oder Zinn beschichtet ist.

13. Verfahren zur Herstellung einer Stromsammelschiene (1) gemäß einem der vorherigen Ansprüche, wobei die erste Vertiefung (4) und/oder die zweite Vertiefung (6) in eine erste leitende Schicht (10) der Stromsammelschiene (1) geschnitten wird.

## Revendications

1. Barre omnibus (1), en particulier barre omnibus stratifiée (1), conçue pour le montage d'un composant électronique sur la barre omnibus (1), en particulier d'un composant électronique passif, la barre omnibus (1) comprenant une première couche conductrice (10) comportant un corps principal (3) et au moins une zone d'enfichage (30), ladite au moins une zone d'enfichage (30) étant conçue pour l'insertion d'un élément de contact du composant électronique, en particulier d'une broche (2) du composant électronique, dans la barre omnibus (1), la zone d'enfichage (30) comprenant
- une section centrale (32) muni d'un évidement de réception (31) destiné à recevoir l'élément de contact,
- un premier évidement (4) et un deuxième évidement (6), entourant au moins partiellement la section centrale (32), et
- une section formant pont (8) destinée à relier la section centrale (32) et le corps principal (3) de la première couche conductrice,
dans laquelle
la section formant pont (8), s'étendant entre le corps principal (3) et la section centrale (32), présente une première longueur (L1) le long de sa direction d'extension (E) et une première largeur (W1), mesurée le long d'une direction perpendiculaire à la direction d'extension (E), le rapport de la première largeur (W1) sur la première longueur (L1) est inférieur à 0,5, de préférence inférieur à 0,4 et, de manière particulièrement préférée, inférieur à 0,3,
**caractérisée en ce que** la direction d'extension (E) est inclinée par rapport à une direction radiale (R) partant du centre de la section centrale (32).

2. Barre omnibus (1) selon la revendication 1,
dans laquelle, le long d'une direction radiale (R) partant du centre de la section centrale (32), la section formant pont (8) est disposée au moins partiellement entre le premier évidement (4) et le deuxième évidement (6).

3. Barre omnibus (1) selon la revendication 1,
dans laquelle le premier évidement (4) et/ou le deuxième évidement (6) présente une deuxième longueur maximale (L2) mesurée le long d'une direction radiale (R) partant du centre de la section centrale (32), la première longueur (L1) étant supérieure à la deuxième longueur maximale (L2), de préférence d'au moins 1,3 fois, plus préférablement d'au moins 1,6 fois et, de manière particulièrement préférée, de 2 fois la deuxième longueur maximale (L2).

4. Barre omnibus (1) selon l'une des revendications précédentes,
dans laquelle la première largeur (W1) de la section formant pont (8) a une valeur comprise entre 0,4 mm et 2,5 mm, de préférence entre 0,55 mm et 1,5 mm et, de manière particulièrement préférée, entre 0,65 mm et 1,1 mm.

5. Barre omnibus (1) selon l'une des revendications précédentes,
dans laquelle la barre omnibus (1) comprend une deuxième couche conductrice (20).

6. Barre omnibus (1) selon l'une des revendications précédentes,
dans laquelle le premier évidement (4) et/ou le deuxième évidement (6) comprend une section de deuxième longueur (L2) variable,
le long d'une direction circonférentielle (CD) autour de la section centrale (32), la deuxième longueur (L2) du premier évidement (4) et/ou du deuxième évidement (6), mesurée le long de la direction radiale (R), varie au sein de la section de deuxième longueur variable (L2).

7. Barre omnibus (1) selon l'une des revendications précédentes,
dans laquelle une deuxième longueur maximale (L2) du premier évidement (4) et/ou du deuxième évidement (6), mesurée le long de la direction radiale (R), a une valeur comprise entre 1 mm et 10 mm, de préférence entre 2 mm et 8 mm et, de manière particulièrement préférée, entre 2,5 et 6 mm.

8. Barre omnibus (1) selon l'une des revendications précédentes,
dans laquelle la première largeur (W1) de la section formant pont (8) est constante le long de sa direction d'extension (E).

9. Barre omnibus (1) selon l'une des revendications précédentes,
dans laquelle le premier évidement (4) et/ou le deuxième évidement (6) ont sensiblement la forme d'un croissant.

10. Barre omnibus (1) selon l'une des revendications précédentes,
dans laquelle la région centrale (32) présente une forme circulaire ou elliptique.

11. Barre omnibus (1) selon l'une des revendications précédentes,
dans laquelle la section formant pont (8), le corps principal (3) et/ou la section centrale (32) présentent une épaisseur comprise entre 0,4 mm et 2,5 mm, de préférence entre 0,55 mm et 1,5 mm et, de manière particulièrement préférée, entre 0,65 mm et 1,1 mm.

12. Barre omnibus (1) selon l'une des revendications précédentes,
dans laquelle la région centrale (32) est recouverte de nickel et/ou d'étain.

13. Procédé de fabrication d'une barre omnibus (1) selon l'une des revendications précédentes,
dans lequel le premier évidement (4) et/ou le deuxième évidement (6) est découpé dans une première couche conductrice (10) de la barre omnibus (1).
